# EUROPÄISCHE PATENTSCHRIFT

(11) **EP 0 509 145 B1**
(45) Veröffentlichungstag und Bekanntmachung des Hinweises auf die Patenterteilung: **18.01.1995**
(21) Anmeldenummer: 91121459.1
(22) Anmeldetag: 14.12.1991
(51) Int. Cl.: B65G 21/00, B65G 21/02

(54) **Tragkonstruktion zur Führung von Bandförderern, insbesondere Schlauchbandförderern**
Supporting structure for guiding belt conveyors particularly tubular belt conveyors
Structure portante pour guider des convoyeurs à bande notamment des convoyeurs à bande turbulaire

(30) Priorität: 16.04.1991 DE 4112380; 31.05.1991 DE 4117901
(43) Veröffentlichungstag der Anmeldung: 21.10.1992
(73) Patentinhaber: PWH Anlagen + Systeme GmbH, D-66386 St. Ingbert-Rohrbach (DE)
(72) Erfinder: Steckel, Horst, D-66386 St. Ingbert (DE)
(74) Vertreter: John, Ernst

(56) Entgegenhaltungen:
- FR-A- 1 354 504
- FR-A- 2 050 217
- FR-A- 2 642 739
- US-A- 3 294 252

## Beschreibung

Die Erfindung betrifft ein Traggerüst für entlang von geradlinigen und gebogenen, Ebenen und Höhen überwindenden Streckenabschnitten geführte Bandförderer, insbesondere Schlauchbandförderer, das aus einer Vielzahl von untereinander verbindbaren Abschnitten gebildet ist, wobei die einzelnen Abschnitte entsprechend dem jeweiligen Streckenverlauf unmittelbar auf Bodenfundamenten oder aber auf an Fundamenten befestigten, beabstandeten Stützen verlagerbar sind und wobei im wesentlichen jeder Abschnitt mindestens ein Rohr beinhaltet, an welchem mindestens ein Laufsteg vorgesehen und der Bandförderer bzw. dessen Tragrollensätze über Verbindungselemente gegenüber dem Rohr verlagert ist bzw. sind.

Durch das deutsche Gebrauchsmuster 19 25 480 ist ein Teilstück für Förderbrücken, insbesondere zur Überwindung von Höhenunterschieden und/oder zur Überschreitung Öffentlicher Verkehrswege mit einem einzigen Hohlprofilträger vorbekannt, an dem eine den Förderer und Gehsteige aufnehmende Plattform angeordnet ist. Das Teilstück besteht aus einem Hohlprofilträger, beispielsweise einem Rohr von Fabrikationslänge, an dessen oberer Querschnittshälfte die Tragrollensätze des Förderers, jeder Teil für sich unmittelbar oder über Stützbleche und an den etwa im Bereich der unteren Querschnittshälfte die Träger der Gehsteige unmittelbar oder über Stützbleche befestigt bzw. abgestützt sind. Infolge der einzelnen vertikalen Abstützung zum Boden hin, bedingt dieses Teilstück in Abhängigkeit von seiner jeweiligen Länge eine Vielzahl von Stützen, damit die Konstruktion nicht durchhängt. Die Verwendung eines Schlauchbandförderers anstelle des herkömmlichen Bandförderers im Bereich des Rohres erscheint problematisch und dürfte konstruktiv und praktisch kaum durchführbar sein.

Der Zeitschrift "Bulk Solids Handling", Vol. 10, Nr. 3, August 1990 ist ein Aufsatz mit folgendem Titel zu entnehmen: "Innovative Handling of Tailings Using the Pipe Conveyor System" (Seiten 311-314). Hier ist insbesondere auf den Selten 311 und 312 eine Tragkonstruktion für Schlauchbandförderer zu entnehmen, wobei die Tragkonstruktion in ihrer Gesamtheit als Fachwerk ausgebildet ist. Die Tragkonstruktion selber ist unmittelbar auf Bodenfundamenten und Stützen verlagert und dem jeweiligen Geländeverlauf (Kurven) angepaßt. Die Nachteile einer solchen Konstruktion sind im wesentlichen darin begründet, daß es verhältnismäßig kompliziert ist, einerseits den Schlauchbandförderer in dieses Fachwerk einzubringen und andererseits bei Reparaturen daraus zu entfernen, da das gesamte System geschlossen ist. Ferner nachteilig ist die aufwendige, kostenintensive Bauweise, die ebenfalls zu Problemen im Hinblick auf Korrosion führt. Ferner nachteilig ist, daß die an sich geraden Fachwerkabschnitte mit etwa 1,5 m Knicken im Kurvenverlauf nach Art eines Polygones geführt werden können, wobei auch der Schlauchbandförderer polygonartig in die Kurven geführt wird. Da hier kein echter Kurvenradius erreicht wird, kann es im Bereich der einzelnen Tragrollenstationen zu nicht unerheblichen Belastungen der einzelnen Laufrollen kommen, die zu einem raschen Verschleiß einerseits der Laufrollen und andererseits des Schlauchbandes selber führen können.

Ziel des Erfindungsgegenstandes ist es, das im gattungsbildenden Teil des ersten Patentanspruches beschriebene Traggerüst dahingehend weiterzubilden, daß einerseits eine universelle Verlagerbarkeit unabhängig von der Art des Förderers (Bandförderer, Schlauchbandförderer) möglich ist und andererseits zum Zwecke der besseren Handhabbarkeit bzw. Zugänglichkeit Sämtlicher Bauteile des Förderers geschaffen wird, wobei auch bei polygonaler Anordnung der einzelnen Traggerüstabschnitte in Kurvenbereichen eine Möglichkeit vorhanden ist, den Förderer entsprechend dem tatsächlichen Kurvenradius zu führen.

Dieses Ziel wird erfindungsgemäß durch die Kombination folgender Merkmale erreicht:
- das Rohr ist bei Verwendung von relativ weit beabstandeten Stützen mit einer fachwerkartigen Unter- bzw. Überspannung versehen,
- die Stützen sind im Querschnitt A-förmig ausgebildet und ausschließlich in den Endbereichen vorgesehen,
- der Laufsteg ist im oberen Bereich des Rohres angeordnet und mittels Knotenblechen gegenüber dem Rohr verlagert,
- der Laufsteg ist zur seitlichen Aufnahme der Tragrollensätze bzw. des Bandförderers mit einer Vielzahl von beabstandeten Vertikalstäben versehen, die im Bereich ihrer freien Enden über einen Horizontalstab miteinander verbunden sind.

Vorteilhafte Weiterbildungen des Erfindungsgegenstandes sind den Unteransprüchen zu entnehmen.

Die erforderlichen Radien für den Bandförderer können durch einfache Verschiebung der Tragrollensätze an den Vertikalstäben sowie durch horizontale Verschiebung der Vertikalstäbe mit den Laufstegkragarmen an den Knotenblechen herbeigeführt werden. Durch diese Maßnahme entstehen keine Polygonknicke wie beim Fachwerk und Ober- und Untergurt des Bandförderers können entsprechend den Kurvenradien (horizontal und vertikal) optimal geführt werden.

Die Stützen bestehen vorzugsweise aus zwei Rohren, die in A-Form ausgeführt werden, wobei die Achsen der Rohre sich etwa im Windschwerpunkt der Tragkonstruktion schneiden, um auf diese Weise die in das System durch Windkräfte eingetragenen Momente auszuschalten bzw. auf ein Minimum zu reduzieren.

Im Gegensatz zum Fachwerk ist durch den Erfindungsgegenstand eine leichte Montage und Demontage des Bandförderers, insbesondere des Schlauchbandförderers gegeben, da dieser in geteilten Trommeln oder Blechen gehalten ist.

Es wird eine wartungsfreundlichen Konstruktion mit wenigen Teilen und glatten Flächen gebildet, wobei insbesondere notwendige Anstriche in einfacher Weise durchgeführt werden können. Gegenüber der Fachwerkkonstruktion ergibt sich eine Gewichtsersparnis von bis zu 35 %, die ebenfalls eine Fertigungsersparnis von bis zu 40 % infolge geringerer Teileanzahl und weniger Schweißarbeiten mit sich bringt. Bei der Montage auf der Baustelle sind so gut wie keine Schweißarbeiten durchzuführen, da sämtliche Bauteile eines jeden Abschnittes miteinander verschraubt sind.

Als Tragrollensätze für Schlauchbandförderer werden für Kurvenbereiche geteilte Trommeln und auf gerader Strecke dickere Bleche in ebenfalls geteilter Form verwendet.

Die Erfindung ist anhand von Ausführungsbeispielen in der Zeichnung dargestellt und wird wie folgt beschrieben. Es zeigen:
- Figuren 1 und 2: - Darstellung einer geradlinig verlaufenden Traggerüstkonstruktion mit Unterspannung in verschiedenen Ansichten für gerade Streckenabschnitte
- Figuren 3 und 4: - Darstellung einer polygonal verlaufenden Traggerüstkonstruktion mit Unterspannung in verschiedenen Ansichten für Horizontalkurven
- Figuren 5 und 6: - Darstellung einer Traggerüstkonstruktion mit Überspannung in verschiedenen Ansichten
- Figur 7: - Darstellung einer Traggerüstkonstruktion zur Aufnahme zweier Schlauchbandförderer
- Figuren 8 und 9: - Traggerüstkonstruktion im Bereich zweier miteinanderverbindbarer Abschnitte
- Figur 10: - Traggerüstkonstruktion mit als geteilte Trommeln ausgebildeten Tragrollensätzen im Kurvenbereich
- Figur 11: - Traggerüstkonstruktion mit als geteilte Bleche ausgebildeten Tragrollensätzen für geradlinige Streckenbereiche
- Figur 12: - Teildarstellung der Unterspannung

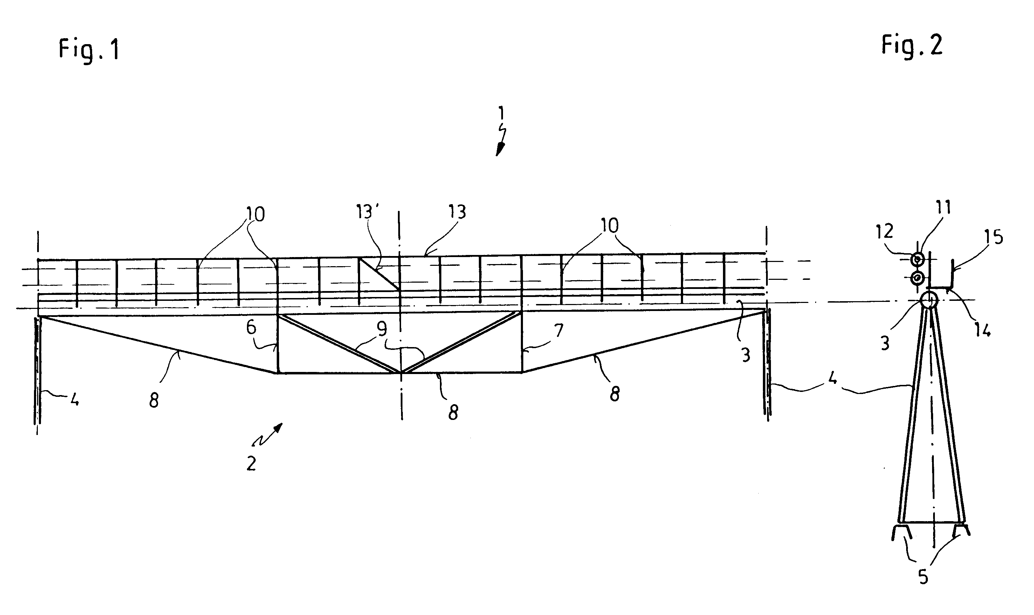

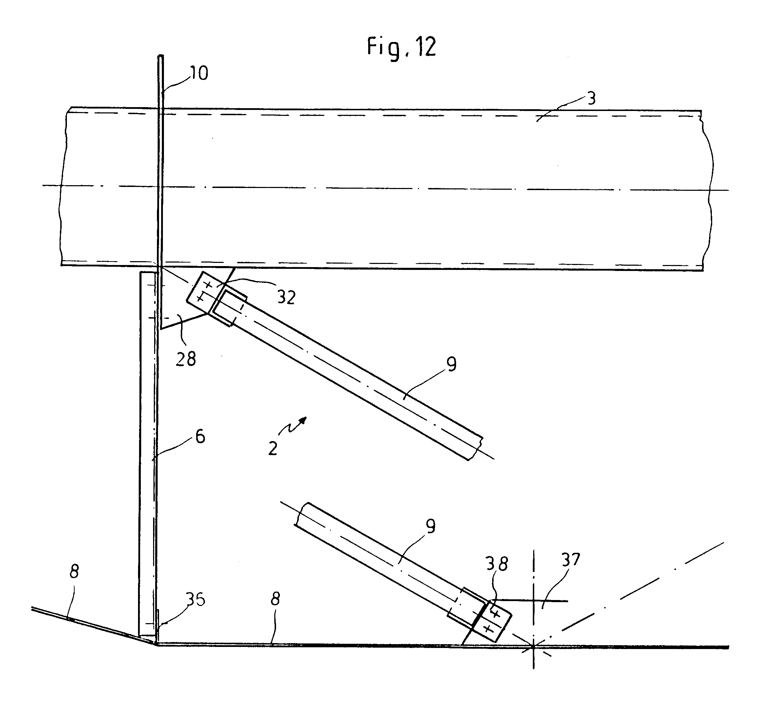

Die Figuren 1 und 2 zeigen einen Abschnitt 1 einer Traggerüstkonstruktion mit Unterspannung 2 für gerade Streckenabschnitte. Der Abschnitt wird gebildet durch ein Rohr 3 als Trägerelement, das in seinen beiden Endbereichen mit im Querschnitt A-förmigen Stützen 4 versehen ist, die wiederum auf entsprechenden Fundamenten 5 am Boden verankert sind. Die Unterspannung 2 wird, da der Abschnitt relativ lang ist (z.B. 30 m) gebildet durch im Querschnitt etwa U-förmige Vertikalstäbe 6,7, Flachstählen 8 sowie Rohrelementen 9. Die Anbindung am Rohr wird in Figur 12 näher erläutert. Etwa in der vertikalen Mittelachse des Rohres 3 sind oberhalb desselben eine Vielzahl von Vertikalstäben 10 vorgesehen, die zur Aufnahme der den hier nur angedeuteten Schlauchbandförderer 11 führenden Tragrollensätze 12 dienen. Die Tragrollensätze 12 sind vorzugsweise übereinander angeordnet. Die Vertikalstäbe 10 sind über einen Horizontalstab 13 mit Diagonale 13' miteinander verbunden, um die nötige Steifigkeit in der Konstruktion zu erzeugen. Über hier nicht weiter dargestellte Knotenbleche ist ein Laufgitter 14 mit Rohrgeländer 15 gegenüber dem Rohr 3 verlagert.

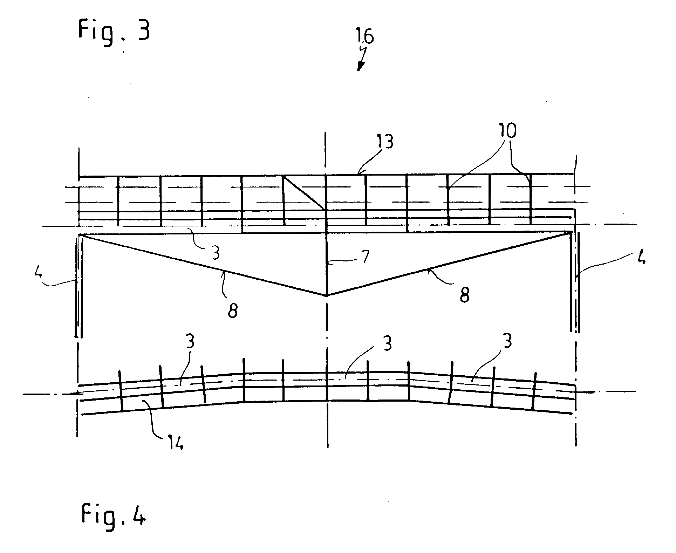

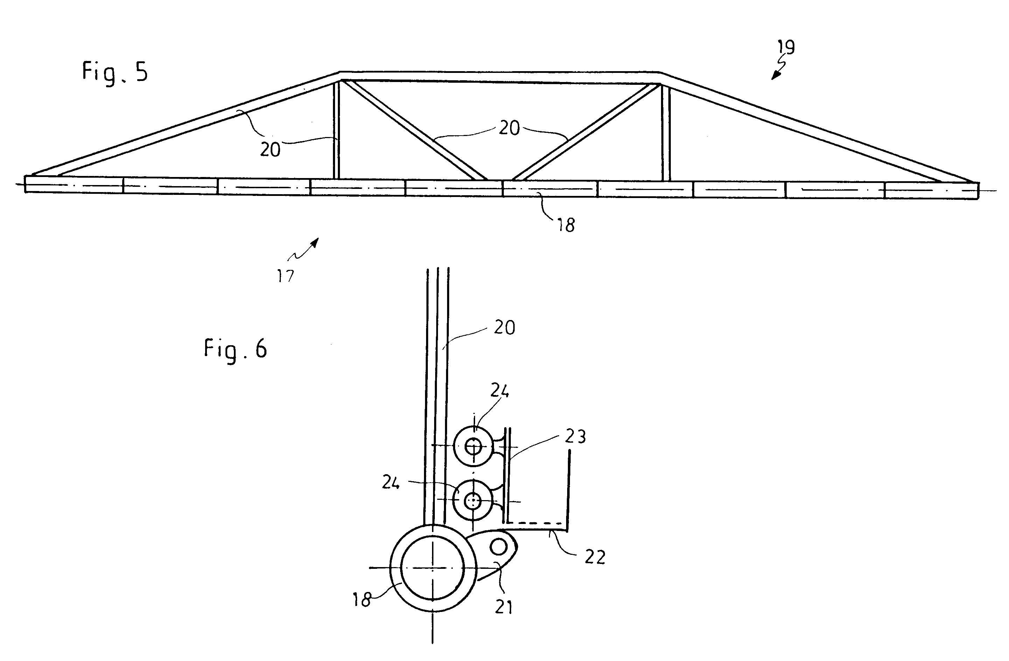

Die Figuren 3 und 4 zeigen einen Abschnitt 16 von geringerer Länge (z.B. 15 m), der analog zu dem Abschnitt 1 in seinen Endbereichen mit A-Stützen 4 versehen ist. Der Abschnitt 16 ist für die Ausrichtung einer Horizontalkurve ausgebildet, wobei mehrere Rohrsegmente 3 unter Bildung entsprechender Winkel miteinander verbunden sind. Die Unterspannung 2 wird lediglich aus einem mittleren, vertikal verlaufenden Stab 7 in Verbindung mit Flachstählen 8 gebildet. Auch hier ist ein Laufsteg 14 vorgesehen. Analog zum Abschnitt 1 sind die Vertikalstäbe 10 in Verbindung mit dem Horizontalstab 13 ausgebildet.

Die Figuren 5 und 6 zeigen einen alternativ ausgebildeten Abschnitt 17, der ein Rohr 18 mit einer Überspannung 19 beinhaltet, die aus statischen Gründen aus Rohrelementen 20 gebildet ist. Über Knotenbleche 21 ist der Laufsteg 22 gegenüber dem Rohr 18 verlagert. Analog zu den Abschnitten 1 und 16 sind auch hier eine Vielzahl von Vertikalstäben 23 zur Aufnahme der Tragrollensätze 24 vorgesehen.

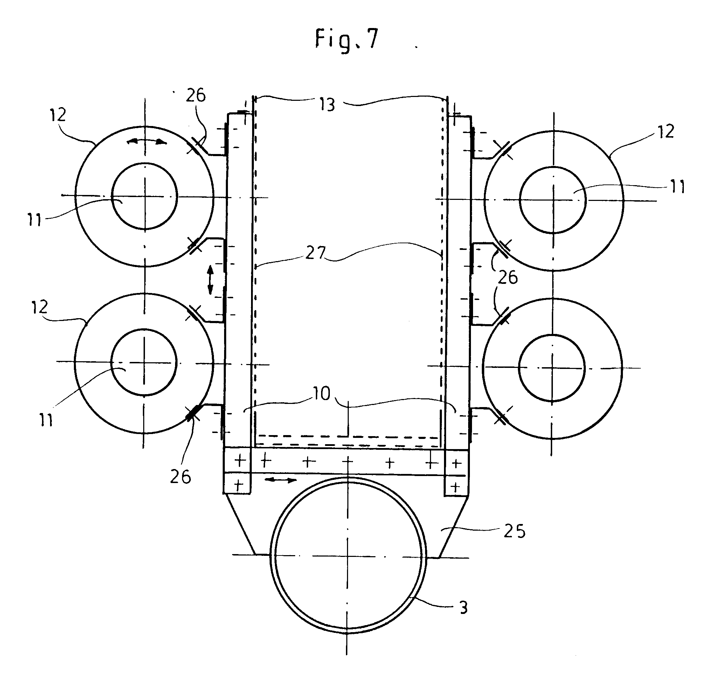

Figur 7 zeigt eine Alternative zu den Figuren 1 bis 4, wobei ein Rohr 3 vorgesehen ist, das über entsprechenden Knotenbleche 25 mit dem Laufsteg 14 verbunden ist. Beiderseits des Laufsteges erstrecken sich Vertikalstäbe 10, die, wie bereits angedeutet, über winkelförmige Horizontalstäbe 13 untereinander verbunden sind. Über entsprechende Halterungen 26 sind die Tragrollensätze 12 zur Aufnahme zweier Schlauchbandförderer 11 (nur angedeutet) vorgesehen. Aus Sicherheitsgründen sind im Innenbereich des Laufsteges Gitter 27 vorgesehen. Der Laufsteg 14 ist gegenüber den Knotenblechen 25 verschraubt, wobei zum Einstellen der Kurvenradien der Laufsteg in horizontaler Richtung gegenüber den Knotenblechen 25 versetzbar ist.

Gleiches gilt für die Halterungen 26, die zur Bildung von Vertikalradien gegenüber den Vertikalstäben 10 versetzbar sind. Die Tragrollenstationen 12, die vorzugsweise aus geteilten, im Querschnitt etwa T-förmigen Trommeln gebildet sind, und im Bereich ihrer Radialschenkel zur Verlagerung der hier nicht dargestellten Laufrollen dienen, können in Umfangsrichtung gegenüber den Halterungen 26 verstellt werden. Infolge dieser Verstellungsmaßnahmen können selbst bei in den Figuren 3 und 4 dargestellter polygonaler Bauweise des Abschnittes 16 die tatsächliche Kurvenradien herbeigeführt werden, so daß der Schlauchbandförderer 11 ohne Zwängungen in den entsprechenden Tragrollensätzen 12 geführt werden kann.

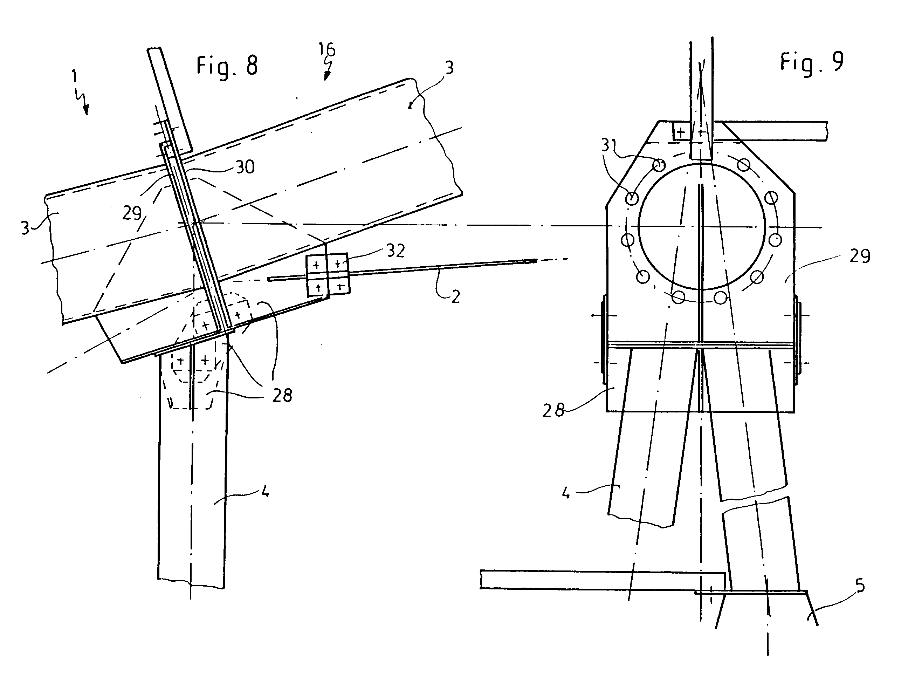

Die Figuren 8 und 9 zeigen eine Traggerüstkonstruktion im Bereich zweier miteinander verbindbarer Abschnitte 1, 16. Erkennbar sind die Rohre 3, die Stützen 4 sowie die angedeutete Unterspannung 2. In den Endbereichen der Abschnitte 1,16 sind an den Stützen 4 über Knotenbleche 28 anschraubbare Kopfplatten 29,30 vorgesehen, die über Schrauben 31 miteinander verbindbar sind. Zum Ausgleich temperaturbedingter Dehnungen der Abschnitte 1,16 können im Bereich der Verschraubung 31 Scheiben oder Futterelemente (nicht dargestellt) vorgesehen werden. Die nur angedeutete Unterspannung 2 ist ebenfalls über Knotenbleche 32 am Knotenblech 28 der Kopfplatten 29,30 verschraubt.

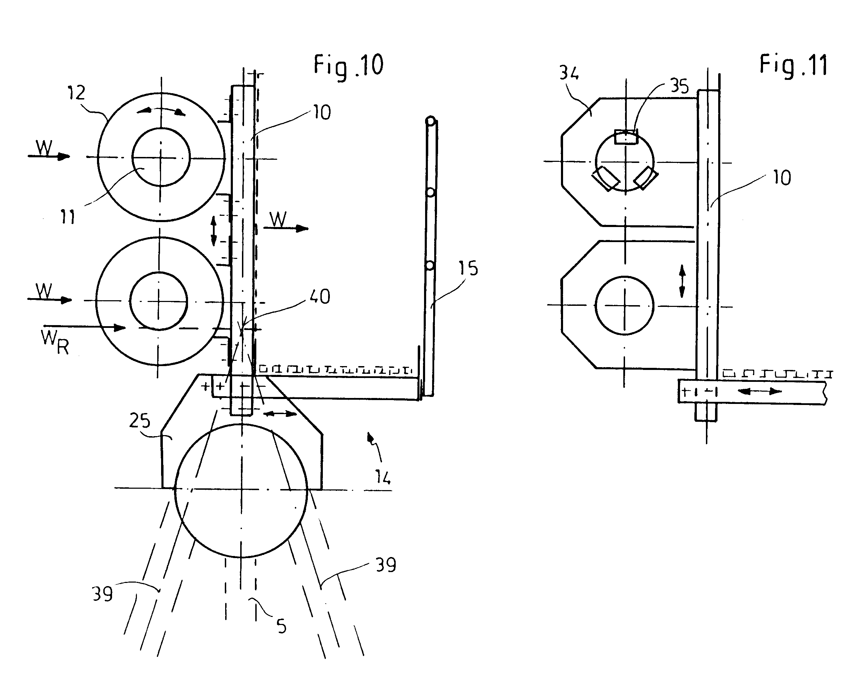

Figur 10 ist etwa analog zu Figur 2 zu sehen (polygonale Führung), wobei das Rohr 3 unmittelbar auf einem Bodenfundament 5 verlagert ist. Erkennbar ist, daß der Laufsteg 14 über ein Knotenblech 25 gegenüber dem Rohr 3 verlagert ist. Die Vertikalstabe 10 sind am Knotenblech 25 verschraubt und bei Bedarf in der Höhe einstellbar. An den Vertikalstäben 10 sind die Kragarme 33 des Laufsteges 14 angeschraubt, wobei ebenfalls zu Einstellungszwecken eine Verlagerung in horizontaler Richtung möglich ist. Die Vertikalstäbe 10 nehmen, wie bereits angesprochen, über Halterungen 26 die als geteilte Trommeln ausgebildeten Tragrollensätze 12 zur Führung des Schlauchbandförderers 11 auf.

Darüber hinaus ist dieser Darstellung auch zu entnehmen, daß die Achsen 39 (Mittellinien) der Stützen 4 (nur angedeutet) dergestalt am Rohr 3 verlaufen, daß sie sich oberhalb des Rohres 3 im Windschwerpunkt 40 schneiden. Der Windschwerpunkt ergibt sich aus der Zusammenstellung der einzelnen Windkräfte W, die an der gesamten Tragkonstruktion (Abschnitt 1) angreifen und zusammengesetzt die Resultierende W_{R} ergeben, deren Verlängerung sich mit den Achsen 39 schneidet.

Figur 11 ist etwa analog zu Figur 1 zu sehen, wobei an den Vertikalstäben 10 die Tragrollensätze 34 in Form von dickeren geteilten Blechen verlagert sind. Die Laufrollen 35 zur Führung des Schlauchbandförderers 11 sind hier lediglich angedeutet.

Figur 12 zeigt die Anbindung der Unterspannung 2 am Rohr 3. Erkennbar sind ein im Querschnitt U-förmiger Vertikalstab 6, ein Rohr 9 sowie Knotenbleche 28, 32. Ferner erkennbar sind die Flachstähle 8, die einerseits über Bleche 36 mit dem Vertikalstab 6 verbunden sind und andererseits über weitere Knotenbleche 37,38 das freie Ende des Rohres 9 aufnehmen.

Wie aus den Figuren 1 bis 12 ersichtlich sind sämtliche Bauteile, mit Ausnahme der durch Schweißen an dem Rohr fest verlagerten Knotenbleche, durch Schraubung miteinander verbunden, so daß auch zu Transportzwecken ein einfach bauendes System gebildet wird. Auf der Baustelle müssen keine umständlichen Schweißarbeiten mehr durchgeführt werden, so daß Montage, Demontage und Wartungsarbeiten problemlos durchgeführt werden können. Die einzelnen Bauteile der Abschnitte sind, soweit möglich, baugleich auszuführen, um auf diese Weise eine kostengünstige Konstruktion zu bieten.

Der Erfindungsgegenstand ist neben Schlauchbandförderern auch auf Bandförderer allgemeiner Bauweise (gemuldete Form mit unteren Tragrollensätzen) anwendbar, wobei lediglich die Halterungen entsprechend der jeweiligen Muldung des Bandförderers zu ändern sind. Auch hier besteht die Möglichkeit, Ober- und Untertrum an den Vertikalstäben zu verlagern.

## Patentansprüche

1. Traggerüst für entlang von geradlinigen und gebogenen, Ebenen und Höhen überwindenden Streckenabschnitten geführte Bandförderer, insbesondere Schlauchbandförderer, das aus einer Vielzahl von miteinander verbindbaren Abschnitten gebildet ist, wobei die einzelnen Abschnitte entsprechend dem jeweiligen Streckenverlauf unmittelbar auf Bodenfundamenten (5) oder aber auf an Fundamenten befestigten beabstandeten Stützen (4) verlagerbar sind und wobei im wesentlichen jeder Abschnitt mindestens ein Rohr (3,18) beinhaltet, an welchem mindestens ein Laufsteg (14,22) vorgesehen und der Bandförderer (11) bzw. dessen Tragrollensätze (12,24,34) über Verbindungselemente gegenüber dem Rohr verlagert ist bzw. sind, gekennzeichnet durch folgende Merkmale:
- das Rohr (3,18) ist bei Verwendung von relativ weit beabstandeten Stützen (4) mit einer fachwerkartigen Unter- (2) bzw. Überspannung (19) versehen,
- die Stützen (4) sind im Querschnitt A-förmig ausgebildet und ausschließlich in den Endbereichen vorgesehen,
- der Laufsteg (14,22) ist im oberen Bereich des Rohres (3,18) angeordnet und mittels Knotenblechen (21,25) gegenüber dem Rohr (3,18) verlagert,
- der Laufsteg (14,22) ist zur seitlichen Aufnahme der Tragrollensätze (12,24,34) bzw. des Bandförderers (11) mit einer Vielzahl von beabstandeten Vertikalstäben (10,23) versehen, die im Bereich ihrer freien Enden über einen Horizontalstab (13) miteinander verbunden sind.

2. Traggerüst nach Anspruch 1, dadurch gekennzeichnet, daß die Stützen (4) dergestalt am Rohr (3,18) verlagert sind, daß sich die Achsen (39) der Stützen (4) im Windschwerpunkt (40) der Abschnitte (1) schneiden.

3. Traggerüst nach den Ansprüchen 1 und 2, dadurch gekennzeichnet, daß die Unterspannung (2) durch im Querschnitt U-förmige, im wesentlichen vertikal verlaufende und über Knotenbleche (28) mit dem Rohr (3) verbundene Stäbe (6,7) gebildet ist, an deren freien Enden von den Rohrenden ausgehende Flachstähle (8) befestigt sind.

4. Traggerüst nach den Ansprüchen 1 und 2, dadurch gekennzeichnet, daß die Überspannung (19) aus einer Rohrkonstruktion (20) gebildet ist.

5. Traggerüst nach den Ansprüchen 1 bis 3, dadurch gekennzeichnet, daß in Abhängigkeit von der Länge der jeweiligen Abschnitte (1,16) mehrere Vertikalstäbe (6,7) vorgesehen sind, und daß zwischen den einzelnen Vertikalstäben (6,7) Versteifungsrohre (9) angeordnet sind, die von den Knotenblechen (28) ausgehend, aufeinanderzu laufen und mit dem etwa horizontal verlaufenden Bereich des Flachstahles (8) verbindbar sind.

6. Traggerüst nach Anspruch 5, dadurch gekennzeichnet, daß die Bauteile (6-9) der Unterspannung (2) einerseits miteinander und andererseits mit den korrespondierenden Knotenblechen (28) des Rohres (3) verschraubbar sind.

7. Traggerüst nach den Ansprüchen 1 bis 6, dadurch gekennzeichnet, daß die in den Endbereichen der Abschnitte (1,16,17) angeordneten A-Stützen mit am Rohr (3,18) verschweißbaren weiteren Knotenblechen (28) versehen sind, an denen jeweils eine etwa vertikal verlaufende, über den Durchmesser des Rohres (3,18) hinausgehende Kopfplatte (29,30) angeformt ist.

8. Traggerüst nach Anspruch 7, dadurch gekennzeichnet, daß die einzelnen Abschnitte (1,16,17) im Bereich der Kopfplatten (29,30) miteinander verschraubbar (31) sind, wobei bei Bedarf zum Dehnungsausgleich Scheiben oder Futterbleche vorgesehen sind.

9. Traggerüst nach den Ansprüchen 1 bis 8, dadurch gekennzeichnet, daß die Knotenbleche (25,28,32,37,38) im Bereich eines jeden Abschnittes (1,16,17) im wesentlichen baugleich ausgebildet und mit einer Profilierung entsprechend dem Rohrradius versehen sind.

10. Traggerüst nach den Ansprüchen 7 und 8, dadurch gekennzeichnet, daß an den Außenkanten der Kopfplatten (29,30) unterhalb des Rohres Laschenverbindungen vorgesehen sind.

11. Traggerüst nach den Ansprüchen 1 bis 10, dadurch gekennzeichnet, daß die die Tragrollensätze (12,24,34) aufnehmenden Vertikalstäbe (10,23) an den oberhalb des Rohres (3,18) vorgesehenen Knotenblechen (21,25) verschraubt sind.

12. Traggerüst nach den Ansprüchen 1 bis 11, dadurch gekennzeichnet, daß die Vertikalstäbe (10,23) zur Bildung von Radien für den Bandförderer (11) gegenüber den Knotenblechen (21,25) in vertikaler Richtung versetzbar sind.

13. Traggerüst nach den Ansprüchen 1 bis 12, dadurch gekennzeichnet, daß die den Laufsteg (14,22) bildenden Kragarme (33) an den Vertikalstäben (10,23) verschraubt und im Bereich ihrer freien Enden mit einem Rohrgeländer (15) versehen sind.

14. Traggerüst nach Anspruch 12, dadurch gekennzeichnet, daß die Vertikalstäbe (10,23) samt Laufsteg (14,22) gegenüber den Knotenblechen (21,25) zur Bildung von Radien für den Bandförderer (11) in horizontaler Richtung versetzbar sind.

15. Traggerüst nach den Ansprüchen 1 bis 14, dadurch gekennzeichnet, daß die Tragrollensätze (12,34) gegenüber den Vertikalstäben (10,23) in vertikaler Richtung verstellbar sind.

16. Traggerüst nach den Ansprüchen 1 bis 15, dadurch gekennzeichnet, daß die Tragrollensätze (12) bei Verwendung von Schlauchbandförderern (11) als mittels eines Verschlußelementes verschließbare Trommeln mit etwa T-förmigem Querschnitt ausgebildet sind, wobei die Tragrollen (35) zur Führung des Schlauchbandes (11) alternierend am Radialschenkel der Trommel verlagert sind.

17. Traggerüst nach den Ansprüchen 1 bis 16, dadurch gekennzeichnet, daß die Tragrollensätze (12,34) über entsprechende Halterungen (26) mit den Vertikalstreben (10,23) verschraubbar sind, wobei die Tragrollensätze (12) gegenüber den Halterungen (26) in Umfangsrichtung versetzbar sind.

18. Traggerüst nach Anspruch 4, dadurch gekennzeichnet, daß der Laufsteg (22) seitlich neben der Überspannung (19) führbar und die Tragrollensätze (24) bzw. der Bandförderer zwischen Überspannung (19) und Vertikalstäben (23) vorgesehen sind.

19. Traggerüst nach Anspruch 17, dadurch gekennzeichnet, daß der Laufsteg (14) einseitig über das Rohr (3) hinausragt, wobei die Vertikalstäbe (10) etwa in der Verlängerung der Vertikalachse des Rohres (3) vorgesehen sind und die Tragrollensätze (12) bzw. der Bandförderer (11) außerhalb des Laufsteges (14) aufnehmen.

20. Traggerüst nach Anspruch 17, dadurch gekennzeichnet, daß der Laufsteg (14) etwa mittig oberhalb des Rohres (3) angeordnet und beidseitig mit Vertikalstäben (10) zur Aufnahme jeweils eines Bandförderers (11) versehen ist.

## Claims

1. Belt frame for belt conveyors, in particular tubular belt conveyors, guided along straight or curved transport sections crossing level or high terrain, which is formed from a plurality of segments which may be connected to one another, wherein individual segments may be supported in keeping with the course of the respective transport section directly on ground foundations (5) or on struts (4) fastened to foundations at intervals, and essentially each segment contains at least one pipe (3, 18), on which at least one walkway (14, 22) is provided and the belt conveyor (11) or its idler sets (12, 24, 34) may be supported in relation to the pipe by means of connecting elements, characterised by the following features:
- when the struts (4) are spaced at relatively wide intervals, the pipe (3, 18) is provided with a lattice-like sub- (2) or superstructure (19),
- the struts (4) have A-shaped cross-sections and are provided solely in the end areas,
- the walkway (14, 22) is located in the upper area of the pipe (3, 18) and is supported in relation to the pipe (3, 18) by means of junction plates (21, 25),
- the walkway (14, 22) is provided with a plurality of spaced vertical rods (10, 23) connected to one another in the area of their free ends via a horizontal rod (13) to laterally receive the idler sets (12, 24, 34) or the belt conveyor (11).

2. Belt frame according to Claim 1, characterised in that the struts (4) are supported on the pipe (3, 18) in such a way that the axes (39) of the struts (4) intersect in the wind focus point (40) of the segments (1).

3. Belt frame according to Claims 1 and 2, characterised in that the sub-structure (2) is formed by rods (6, 7), which have U-shaped cross-sections, extend essentially vertically and are connected to the pipe (3) by means of junction plates (28), and at their free ends flat steel members (8) extending from the pipe ends are fastened.

4. Belt frame according to Claims 1 and 2, characterised in that the superstructure (19) is formed from a pipe construction (20).

5. Belt frame according to Claims 1 to 3, characterised in that several vertical rods (6, 7) are provided in keeping with the length of the respective segments (1, 16), and that reinforcing pipes (9), which extend from the junction plates (28), run towards one another and may be connected to the approximately horizontally extending area of the flat steel member (8), are arranged between the individual vertical rods (6, 7).

6. Belt frame according to Claim 5, characterised in that the components (6-9) of the substructure (2) may be bolted to one another on one side and on the other side may be bolted to the corresponding junction plates (28) of the pipe (3).

7. Belt frame according to Claims 1 to 6, characterised in that the A-shaped struts arranged in the end areas of the segments (1, 16, 17) are provided with further junction plates (28), which may be welded to the pipe (3, 18) and to each of which an approximately vertically extending head plate (29, 30) projecting beyond the diameter of the pipe (3, 18) is formed.

8. Belt frame according to Claim 7, characterised in that the individual segments (1, 16, 17) may be bolted (31) to one another in the area of the head plates (29, 30), in which case discs or shims are provided if necessary to compensate expansion.

9. Belt frame according to Claims 1 to 8, characterised in that the junction plates (25, 28, 32, 37, 38) are of essentially the same construction in the area of each of the segments (1, 16, 17) and are provided with a profile corresponding to the pipe radius.

10. Belt frame according to Claims 7 and 8, characterised in that butt strap connections are provided on the outer edges of the head plates (29, 30) underneath the pipe.

11. Belt frame according to Claims 1 to 10, characterised in that the vertical rods (10, 23) receiving the idler sets (12, 24, 34) are bolted to the junction plates (21, 25) provided above the pipe (3, 18).

12. Belt frame according to Claims 1 to 11, characterised in that the vertical rods (10, 23) may be displaced in vertical direction in relation to the junction plates (21, 25) to form radii for the belt conveyor (11).

13. Belt frame according to Claims 1 to 12, characterised in that the jibs (33) forming the walkway (14, 22) are bolted to the vertical rods (10, 23) and are provided with a tubular guardrail (15) in the area of their free ends.

14. Belt frame according to Claim 12, characterised in that the vertical rods (10, 23) may be displaced together with the walkway (14, 22) in horizontal direction in relation to the junction plates (21, 25) to form radii for the belt conveyor (11).

15. Belt frame according to Claims 1 to 14, characterised in that the idler sets (12, 34) may be shifted in vertical direction in relation to the vertical rods (10, 23).

16. Belt frame according to Claims 1 to 15, characterised in that when tubular belt conveyors (11) are used, the idler sets (12) are constructed in the form of pulleys with approximately T-shaped cross-sections, which may be closed off by means of a sealing element, in which case the idlers (35) are supported alternately on the radial legs of the pulley for guidance of the tubular belt conveyor (11).

17. Belt frame according to Claims 1 to 16, characterised in that the idler sets (12, 34) may be bolted to the vertical rods (10, 23) by means of corresponding mountings (26), in which case the idler sets (12) may be displaced in peripheral direction in relation to the mountings (26).

18. Belt frame according to Claim 4, characterised in that the walkway (22) may be guided laterally adjacent to the superstructure (19) and the idler sets (24) or the belt conveyor are provided between the superstructure (19) and vertical rods (23).

19. Belt frame according to Claim 17, characterised in that the walkway (14) projects on one side beyond the pipe (3), in which case the vertical rods (10) are provided approximately in the extension to the vertical axis of the pipe (3) and receive the idler sets (12) or the belt conveyor (11) outside the walkway (14).

20. Belt frame according to Claim 17, characterised in that the walkway (14) is arranged approximately in the centre above the pipe (3) and is provided on both sides with vertical rods (10) to receive a respective belt conveyor (11).

## Revendications

1. Infrastructure destinée à des convoyeurs à bande guidés le long de sections de parcours rectilignes, courbes et franchissant des plans et des élévations, notamment des convoyeurs à bande tubulaire, et qui est constituée par une multitude de sections assemblables les unes aux autres, les sections individuelles pouvant être déplacées directement, en fonction de chaque tracé des sections, sur des plaques de fond ou sur des supports (4) présentant des écartements et fixés sur des fondements et chaque section comprenant pour l'essentiel au moins un tube (3, 18) sur lequel est prévue au moins une passerelle (14, 22) et le convoyeur à bande (11) ou ses jeux de rouleaux (12, 24, 34) étant déplacés par rapport au tube par l'intermédiaire d'éléments d assemblage, caractérisée par les caractéristiques suivantes:
- le tube (3, 18) est muni d'une sous-tension (2) ou d'une surtension (19) semblables à un treillis, lors de l'utilisation de supports (4) présentant des écartements relativement importants,
- les supports (4) sont conçus en forme de A dans leur section transversale et prévus exclusivement dans les zones terminales,
- la passerelle (14, 22) est disposée dans la zone supérieure du tube (3, 18) et déplacée par rapport au tube (3, 18) au moyen de goussets d'assemblage (21, 25),
- la passerelle (14,22) est munie, pour recevoir latéralement les jeux de rouleaux (12, 24, 34) ou le convoyeur à bande (11), d'une multitude de barres verticales (10, 23) présentant un écartement et qui sont assemblées les unes avec les autres dans la zone de leurs extrémités libres par l'intermédiaire d'une barre horizontale (13).

2. Infrastructure selon la revendication 1, caractérisée en ce que les supports (4) sont déplacés sur le tube (3, 18) de sorte que les axes (39) des supports (4) se coupent au centre de gravité des sections (1), centre de gravité se trouvant sous l'effet du vent (40).

3. Infrastructure selon les revendications 1 et 2, caractérisée en ce que la sous-tension (2) est constituée par des barres (6, 7) en forme de U dans leur section transversale, pour l'essentiel verticales et reliées au tube (3) par des goussets d'assemblage (28), barres aux extrémités libres desquelles sont fixés des aciers plats (8) qui partent des extrémités du tube.

4. Infrastructure selon les revendications 1 et 2, caractérisée en ce que la surtension (19) est constituée à partir d'une structure tubulaire (20).

5. Infrastructure selon les revendications 1 à 3, caractérisée en ce que plusieurs barres verticales (6, 7) sont prévues en fonction de la longueur de chaque section (1, 16) et en ce qu'entre les barres verticales individuelles (6, 7) sont disposés des tubes de renforcement (9) qui arrivent les uns sur les autres en partant des goussets d'assemblage (28) et peuvent être assemblés avec la zone pratiquement horizontale de l'acier plat (8).

6. Infrastructure selon la revendication 5, caractérisée en ce que les éléments de construction (6 à 9) de la sous-tension (2) peuvent être vissés, d'une part, les uns aux autres et, de l'autre, aux goussets d'assemblage correspondants (28) du tube (3).

7. Infrastructure selon les revendications 1 à 6, caractérisée en ce que les supports en A disposés dans les zones terminales des sections (1, 16, 17) sont munis de goussets d'assemblage supplémentaires (28) pouvant être soudés au tube (3, 18) et sur chacun desquels est moulée une semelle de recouvrement (29, 30) pratiquement verticale et dépassant le diamètre du tube (3, 18).

8. Infrastructure selon la revendication 7, caractérisée en ce que les sections individuelles (1, 16, 17) peuvent être vissées les unes aux autres (31) dans la zone des semelles de recouvrement (29, 30), des disques ou des tôles de fourrure étant prévus sur demande pour compenser la dilatation.

9. Infrastructure selon les revendications 1 à 8, caractérisée en ce que les goussets d'assemblage (25, 28, 32, 37, 38) sont conçus dans la zone de chaque section (1, 16, 17) pour l'essentiel en même construction et sont munis d'un profilage en fonction du rayon du tube.

10. Infrastructure selon les revendications 7 et 8, caractérisée en ce que des assemblages à couvre-joints sont prévus sur les bords des semelles de recouvrement (29, 30) au-dessous du tube.

11. Infrastructure selon les revendications 1 à 10, caractérisée en ce que les barres verticales (10, 23) qui reçoivent les jeux de rouleaux (12, 24, 34) sont vissées sur les goussets d'assemblage (21, 25) prévus au-dessus du tube (3, 18).

12. Infrastructure selon les revendications 1 à 11, caractérisée en ce que les barres verticales (10, 23) peuvent être déplacées dans le sens vertical par rapport aux goussets d'assemblage (21, 25), pour former des rayons pour le convoyeur à bande (11).

13. Infrastructure selon les revendications 1 à 12, caractérisée en ce que les bras en porte-à-faux (33) formant la passerelle (14, 22) sont vissés aux barres verticales (10, 23) et munis d'un garde-fou (15) dans la zone de leurs extrémités libres.

14. Infrastructure selon la revendication 12, caractérisée en ce que les barres verticales (10, 23) peuvent être déplacées dans le sens horizontal avec la passerelle (14, 22) par rapport aux goussets d'assemblage (21, 25) pour former des rayons pour le convoyeur à bande (11).

15. Infrastructure selon les revendications 1 à 14, caractérisée en ce que les jeux de rouleaux (12, 34) peuvent être déplacés dans le sens vertical par rapport aux barres verticales (10, 23).

16. Infrastructure selon les revendications 1 à 15, caractérisée en ce que, lors de l'utilisation de convoyeurs à bande tubulaire (11), les jeux de rouleaux (12) sont conçus en tant que tambours pouvant être fermés au moyen d'un élément de fermeture et présentant une section transversale en forme de T, les rouleaux (35) étant déplacés de façon alternante sur le montant radial du tambour, pour guider la bande tubulaire (11).

17. Infrastructure selon les revendications 1 à 16, caractérisée en ce que les jeux de rouleaux (12, 24) peuvent être vissés avec les montants verticaux (10, 23) par l'intermédiaire de fixations correspondantes (26), les jeux de rouleaux (12) pouvant être déplacés dans le sens périphérique par rapport aux fixations (26).

18. Infrastructure selon la revendication 4, caractérisée en ce que la passerelle (22) peut être guidée latéralement à côté de la surtension (19) et en ce que les jeux de rouleaux (24) ou le convoyeur à bande sont prévus entre la surtension (19) et les barres verticales (23).

19. Infrastructure selon la revendication 17, caractérisée en ce que la passerelle (14) fait unilatéralement saillie au-delà du tube (3), les barres verticales (10) étant prévues pratiquement dans le prolongement de l'axe vertical du tube (3) et recevant les jeux de rouleaux (12) ou le convoyeur à bande (11) en dehors de la passerelle (14).

20. Infrastructure selon la revendication 17, caractérisée en ce que la passerelle (14) est disposée pratiquement au centre, au-dessus du tube (3) et munie des deux côtés de barres verticales (10) pour recevoir à chaque fois un convoyeur à bande (11).
